# EUROPEAN PATENT APPLICATION

(11) **EP 3 524 543 A1**
(43) Date of publication of application: **14.08.2019**
(21) Application number: 18156513.6
(22) Date of filing: 13.02.2018
(51) Int. Cl.: B65G 1/02, B65G 1/04

(54) **PRE-MOUNTED TRANSPORT SUPPORTING UNIT FOR A STORAGE SYSTEM AND METHOD FOR ASSEMBLING SUCH A STORAGE SYSTEM**

(71) Applicant: Logevo AB, 34324 Älmhult (SE)
(72) Inventor: Ekenberg, Mats, SE-26652 VEJBYSTRAND (SE)
(74) Representative: Hansson Thyresson AB

(57) **Abstract**

A pre-mounted transport supporting unit (10a-e) for a storage system having at least two spaced apart elongated base portions, each including an elongated main body. The main body has a first end part with a first mounting element and a second end part with a second mounting element arranged opposite the first end part and the first mounting element. by means of the first and second mounting element the transport supporting unit (10a-e) can be mounted to a pre-mounted side unit (22). The transport supporting unit (10a-e) further has at least two spaced apart elongated rail portions, extending between the two base portions in a direction substantially perpendicular to the extension of the main body. The transport supporting unit (10a-e) is configured to support a transportation device when handling and/or storing goods in the storage system.

## Description

### TECHNICAL FIELD

The present invention relates to a transport supporting unit for a storage system, to a storage system and a method for assembling such a storage system. More specifically, it relates to a pre-mounted transport supporting unit for constructing such a storage system.

### STATE OF THE ART

Goods storage systems today tend to grow larger and larger and get more and more automated with less manual handling. Often the storage system is an arrangement of storage levels and storage rows creating a complex system. The storage systems should be able to handle both the supply of goods to the number of storage levels and storage rows, entering the storage system, the storage of the goods in predetermined positions within the storage system and picking of goods, exiting the storage system.

However, still today there are manually storage systems facing the problem of how to replace the manually system to the more automated system while at the same time reducing the effect and interruption of the flow of goods in the storage system. For building these types of new automated storage systems, will have an impact on the supply, the storing and the picking/delivering of goods. The today available storage systems are often complex with all of its features and functions which means that they may be great time consumers during an assembling process. This can lead to financial loss in sales as the store may have to be closed for a longer period during the assembling process, risks of interruptions during operations and/or reduced service level to the customer which in the end also can lead to great financial losses for the store.

### SUMMARY

An object of the present invention is to provide improvements over prior art. This object is achieved by a technique defined in the appended independent claims; certain embodiments being set forth in the related dependent claims.

In a first aspect of the present invention, there is provided a pre-mounted transport supporting unit for a storage system having at least two spaced apart elongated base portions, each including an elongated main body. The elongated main body has a first end part having a first mounting element and a second end part having a second mounting element arranged opposite the first end part and the first mounting element. Further, each base portion includes at least a first pair of rail supporting elements protruding in a direction substantially perpendicular to the extension of the elongated main body. The transport supporting unit further has at least two spaced apart elongated rail portions, extending between the at least two base portions in a direction substantially perpendicular to the extension of the elongated main body of each base portion. The rail portions are configured to be supported by the rail supporting elements. The transport supporting unit is configured to support a transportation device when handling and/or storing goods in the storage system. This pre-mounted transport supporting unit mitigates the issues as explained above, especially with time management when assembling a new storage system.

In an embodiment the first pair of rail supporting elements are arranged to protrude in a substantially vertical upwards or downwards direction. It is beneficial to be able to customize the appearance of the transport supporting unit such that it is adapted to different applications, e.g. arranged in the bottom or in the top of the storage system, and to different types of transportation devices.

In another embodiment each base portion includes at least a second pair of rail supporting elements, arranged subsequently of the first pair of rail supporting elements along the extension of the main body protruding in the same direction as the first pair of rail supporting elements and configured to support two spaced apart elongated rail portions. This is preferred if a storage level of a storage row should include two rail arrangements, i.e. two parallel sets of rail portions arranged in the same storage row.

In yet another embodiment each base portion further includes at least a third pair of rail supporting elements, protruding in an opposite direction of the first pair of rail supporting elements and configured to support two spaced apart elongated rail portions. Further, the first pair of rail supporting elements may be arranged to protrude in a substantially vertical upwards direction and configured to support one type transportation device, and wherein the third pair of rail supporting elements may be arranged to protrude in a substantially vertical downwards direction and configured to support another type of transportation devices. This is a preferred embodiment if a storage level in a storage row should support one type of transportation device on top of the transport supporting unit and another type of transportation device below the transport supporting unit. Thus, being able to arrange two sets of rail portions parallel and one above the other.

Further, in yet another embodiment each base portion includes at least a fourth pair of rail supporting elements arranged subsequently of the third pair of rail supporting elements along the extension of the main body, configured to support two spaced apart elongated rail portions. This is a preferred embodiment if the transport supporting unit shall have two parallel sets of rail portions arranged both on top of the transport supporting element, for supporting one type of transportation devices, and below the transport supporting element, for supporting another type of transportations devices.

In a second aspect of the invention there is provided a storage system for handling and storing goods. The storage system includes a first set of pre-mounted side units and a second set of pre-mounted side units, where each side unit has at least two vertical beams. The side units of each set are arranged beam to beam, space apart and subsequently of each other and where said second set of side units is arranged spaced and opposite of said first set of side unit. The storage system further includes a first set of subsequently arranged pre-mounted transport supporting units as described above, arranged between the first set and the second set of side units. Each base portion of each transport supporting unit, by means of the first and second mounting elements, are mounted to the respective vertical beam. The first set of pre-mounted side units, the second set of pre-mounted side units and the first set of pre-mounted transport supporting units are arranged to create a first storage level of a first storage row of the storage system. The presented storage system with its pre-mounted side units and pre-mounted transport supporting unit mitigates the issues as explained above, especially with time management when assembling such a storage system.

In an embodiment the storage system further includes a second set of subsequently arranged pre-mounted transport supporting units, as described above, arranged between the first set and the second set of pre-mounted side units in a position above the first set of transport supporting units. The first set of pre-mounted side units, the second set of pre-mounted side units and the second set of pre-mounted transport supporting units are arranged to create a second storage level of the first storage row of the storage system. This is advantageous when the storage system shall be built with several levels to maximize the utilization of the height of the storage facility.

In another embodiment the storage system further includes a third set of pre-mounted side units, each side unit having at least two vertical beams where the side units are arranged beam to beam, spaced apart and subsequently of each other, and where the third set of side units is arranged spaced and opposite of the second set of side unit. Further, the storage system includes a third set of subsequently arranged pre-mounted transport supporting units, as described above, arranged between the second set and the third set of side units. The second set of pre-mounted side units, the third set of pre-mounted side units and the third set of pre-mounted transport supporting units are arranged to create a first storage level of a second storage row of the storage system. This is advantageous when the storage system shall be built with several storage rows in order to maximize the utilization of the width of the storage facility.

In a third aspect of the invention there is provided a method for constructing a storage system, as described above, including the steps of:
- providing a first set of pre-mounted side units, where each side unit has at least two vertical beams and wherein the side units are arranged beam to beam, space apart and subsequently of each other,
- mounting at least a first set of subsequently arranged pre-mounted transport supporting units, as described above, to the first set of side units, where each base portion of each transport supporting unit is mounted to respective vertical beam of the first set of side units by means of the first mounting element,
- mounting a second set of pre-mounted side units to the first set of transport supporting units, where each side unit has at least two vertical beams and where each beam is mounted to respective base portion of the first set of transport supporting unit by means of the second mounting element.

The method may further include, before the step of mounting a second set of side unit, the step of:
- mounting at least a second set of subsequently arranged pre-mounted transport supporting units, as described above, to the first set of side units in a position above the first set of transport supporting units such that the first and second set of transport supporting units create two, on top of each other, storage levels.

The method may even further include the steps of:
- mounting at least a third set of subsequently arranged pre-mounted transport supporting units to the second set of side units, where each base portion of each transport supporting unit is mounted to respective vertical beam of the second set of side units by means of the first mounting element, and
- mounting a third set of pre-mounted side units to the third set of transport supporting units, wherein each side unit has at least two vertical beams and wherein each beam is mounted to respective base portion of the third set of transport supporting unit by means of the second mounting element.

### BRIEF DESCRIPTION OF THE DRAWINGS

Embodiments of the invention will be described in the following, reference being made to the appended drawings which illustrate non-limiting examples of how the inventive concept can be reduced into practice.
Fig.1 is a schematic top view of a storage system, according to an embodiment of the invention, with a number of storage sections, transportation aisles and storage rows,
Fig. 2 is a schematic front view of the storage system in Fig. 1, with storage sections and storage levels,
Fig. 3a is a top view of a transport supporting unit, according to an embodiment of the invention, arranged in a storage section of the storage system of Fig. 1,
Fig. 3b is a side view of several transport supporting units in Fig. 3b, arranged in multiple storage levels,
Fig. 3c is a front view of several transport supporting units in Fig. 3a, arranged in multiple storage levels,
Fig. 3d is a partial side view of a storage section illustrating three storage rows and five storage levels,
Fig. 4 is a side view of a base portion, according to an embodiment of the invention, of a transport supporting unit,
Fig. 5a is a perspective view of a side unit according to an embodiment of the invention,
Fig. 5b is a detailed view of a beam of the side unit in Fig. 5a,
Fig. 6 is a perspective view of an initial step of assembling a storage section of a storage system in Fig. 1,
Fig. 7a is a perspective view of the beginning of a following step of assembling a storage section,
Fig. 7b is a perspective view of the finished assembly step, according to an embodiment, in Fig. 7a,
Fig. 7c is a perspective view of the finished assembly step, according to another embodiment, in Fig. 7a,
Fig. 8 is a perspective view of the assembly of a first storage row with multiple storage levels of a storage section in Fig. 1,
Fig. 9a is a perspective view of a further assembling steps of the storage system in Fig. 1,
Fig. 9b is a perspective view of the finished assembling step in Fig. 9a, and
Fig. 10 is a perspective view of two storage sections, according to an embodiment of the invention, and an intermediate transportation aisle.

### DESCRIPTION OF EMBODIMENTS

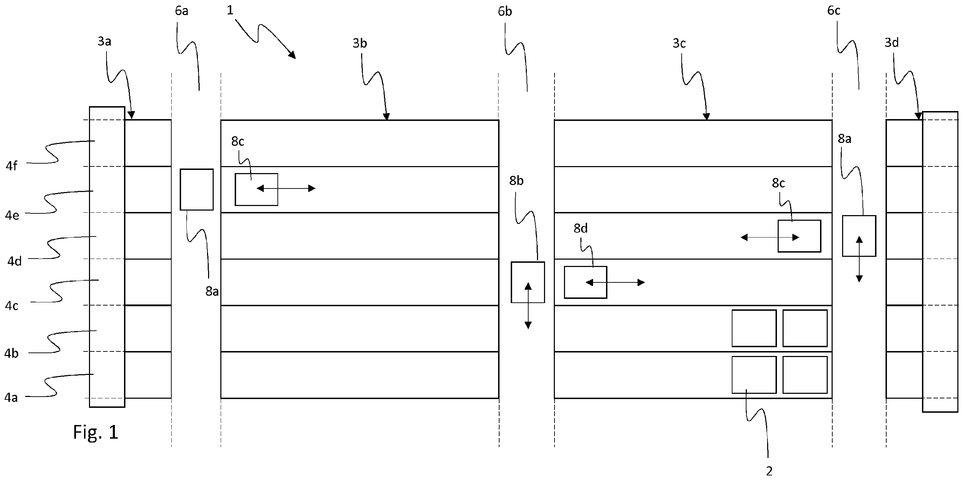

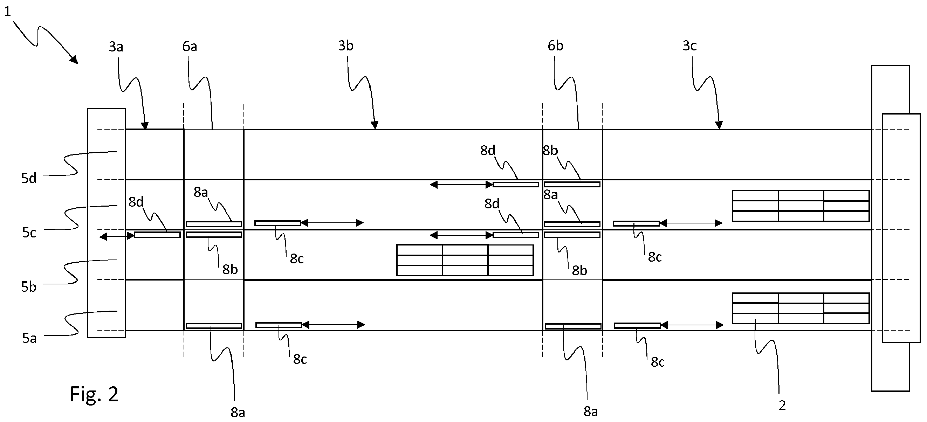

With reference to the appended drawings a pre-mounted transport supporting unit 10, 10a-e, 10'a-e for a storage system 1 and a storage system 1 for handling and storing goods 2 are illustrated. The storage system 1 is divided into storage sections 3a-d designed with several storage rows 4a-f and several storage levels 5a-d. The storage sections 3a-d are separated by a transportation aisle 6a-c in which goods 2 are transported to and from their storage location. The transportation aisles 6a-c are designed to support different types of transportation devices 8a, 8b. One type of transportations device may be a supply transfer cart 8a for transporting goods 2 to be supplied within the storage system 1 and another type of transportation device may be a picker transfer cart 8b for transporting picked up goods 2 from within the storage system 1. Further, the transportation aisles 6a-c are arranged perpendicular to the storage rows 4a-f on every storage level 5a-d, see Figs 1 and 2. The features of a transportation aisle 6a-c are described in more detail later.

Each storage section 3a-d with its storage rows 4a-f and storage levels 5a-d are constructed to include several pre-mounted transport supporting units 10, 10a-e, 10'a-e, i.e. they are mounted as one unit before the storage system is being constructed in the storage facility in order to decrease the time spent on the construction of the storage system. The number of such transport supporting units 10, 10a-e, 10'a-e in each storage row 4a-f and storage level 5a-d may vary depending on the desired length of each transport supporting unit 10, 10a-e, 10'a-e and/or the size of the facility in which the storage system 1 shall operate.

The transport supporting unit 10, 10a-e, 10'a-e includes at least two spaced apart elongated base portions 12, 12a-f. In the shown embodiments there are in between six and eight base portions 12, 12a-f for every transport supporting unit 10, 10a-e, 10'a-e, but may in alternative embodiments be either less or more. The number of base portions 12, 12a-f may be based on the distance of which every transport supporting unit 10, 10a-e, 10'a-e shall cover in the storage system 1 and/or the desired distance between each base portion 12, 12a-f, for example depending on the estimated load each transport supporting unit 10, 10a-e, 10'a-e shall be able to carry.

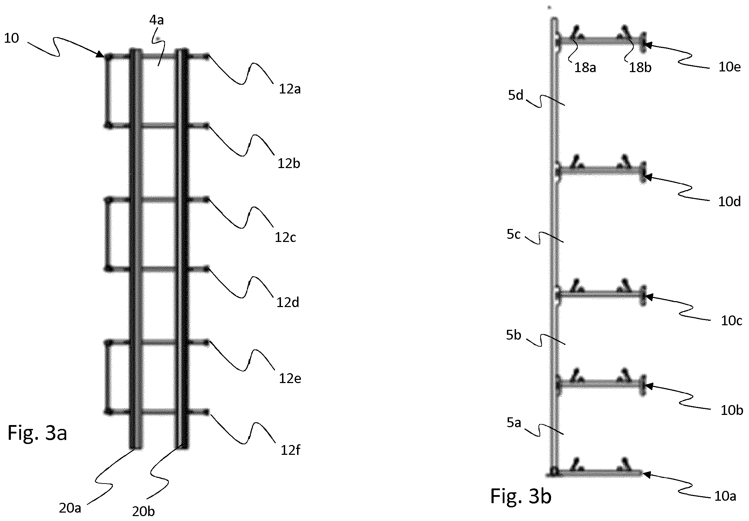

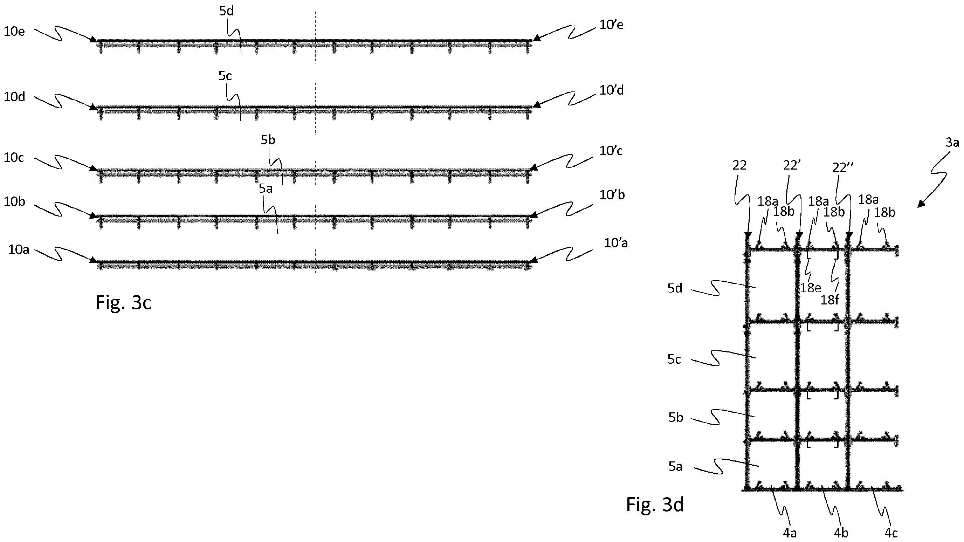

Figs 3a-d illustrate a possible arrangement of transport supporting units 10, 10a-e, 10'a-e, according to an embodiment, from different angles. Figs 3b-d illustrate four storage levels 5a-d, where on each level two subsequently arranged transport supporting units 10a-e, 10'a-e (the separation between the subsequently arrange transport supporting units is marked by the dotted line) connected to each other such that they form one uniform storage level 5a-d. There may of course be more than two subsequently connected transport supporting units 10, 10a-e, 10'a-e depending on the desired length of every storage row 4a-f in each storage section 3a-c.

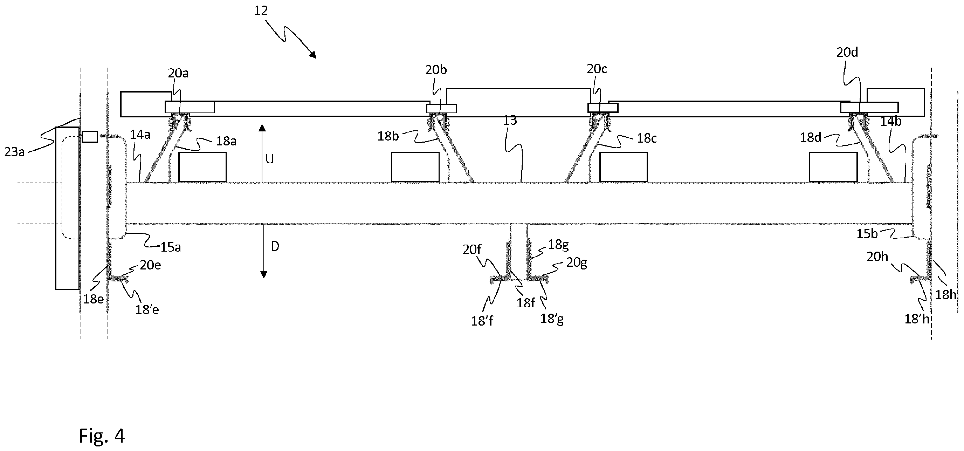

Illustrated in Fig. 4 is an embodiment of a base portion 12 which differs from the base portion 12a-f, illustrated in Figs 3a-d, by being a double compared to the one illustrated in Figs 3a-d. Fig. 4 shows a base portion 12 includes an elongated main body 13 with a first end part 14a comprising a first mounting element 15a and a second end part 14b comprising a second mounting element 14b. The second end part 14b and second mounting element 14b are arranged opposite the first end part 14a and the first mounting element 15b of the elongated main body 13. The base portion 12 further includes a first pair of rail supporting elements 18a-b protruding in a direction substantially perpendicular to the extension of the elongated main body 13. The rail supporting elements 18a-b are arranged subsequently along the extension of the main body 13. Preferably, the first pair of rail supporting elements 18a-b protrude in a substantially vertical upwards U or downwards D direction. In the shown embodiment in Fig. 4, the first pair is arranged in an upward direction U.

Further, the transport supporting unit 10 has two spaced apart elongated rail portions 20a-b. The two rail portions 20a-b are arranged on and supported by the first pair of rail supporting elements 18a-b. They extend between the first and last base portion 12, 12a-f of the transport supporting unit 10, in a direction substantially perpendicular to the extension of the main body 13 of each base portion 12.

Also shown in Fig. 4 is that the base portion 12 further includes a second pair of rail supporting elements 18c-d. The second pair 18c-d is arranged subsequently of the first pair 18a-b along the extension of the main body 13. They protrude in the same direction as the first pair 18a-b, i.e. upwards. The second pair of rail supporting elements 18c-d are also configured to support two spaced apart elongated rail portions 20c-d, similar to the rail portions 20a-b supported by the first pair of rail supporting elements 18a-b. This creates a storage row with two separate parallel rail arrangements.

Yet further, the base portion 12 includes a third and a fourth pair of rail supporting elements 18e-f, 18g-h. These rail supporting elements protrude in an opposite direction of the first and second pair of rail supporting elements 18a-b, 18c-d, i.e. in a downward direction D. Like the other rail supporting elements 18a-b, 18c-d, the third and fourth pair 18e-f, 18g-h are configured to support two similar spaced apart elongated rail portions 20e-f, 20g-h.

In an alternative embodiment, see Fig. 3d, the base portion may include a first pair of rail supporting elements 18a-b protruding in a substantially vertical upward direction and a second pair of rail supporting elements 18e-f protruding in a substantially vertical downward direction, i.e. in opposite direction of the first pair. The first and second pair of rail supporting elements 18a-b, 18e-f are located one above the other, creating a single rail arrangement which differs from the double rail arrangement shown in Fig. 4. Fig. 3d illustrate a storage section 3a where two storage rows 4a, 4c have a single rail arrangement with a base portion having one pair of rail supporting elements 18a-b protruding in a substantially vertical upward direction, and one storage row 4b has a single rail arrangement with a base portion having both a pair of rail supporting elements 18a-b protruding in a substantially vertical upward direction and a pair of rail supporting elements 18e-f protruding in a substantially downward direction. The rail arrangements in storage rows 4a, 4c are basically configured to support, by means of the rail portions, a supply shuttle 8c, as explained below. Meanwhile the rail arrangement in storage row 4b is basically configured to support (with exception of the ground level), by means of the rail portions, both a supply shuttle 8c and a picker shuttle 8d, also explained below.

The appearance of the first and second pair of rail supporting elements 18a-b, 18c-d, shown in Fig. 4, differs in some way from the appearance of the third and fourth of rail supporting elements 18e-f, 18g-h. The third and fourth pair are arranged to support a transportation device 8 which is substantially arranged underneath the rail portions 20e-f, 20g-h. Thus, their appearance differs from the first and second pair of rail supporting element 18a-b, 18c-d, which are arranged to support a transportation device 8 operating on top of the rail portions 20a-b, 20c-d and the rail supporting elements 18a-b, 18c-d, but their tasks are the same. The third and fourth pair of rail supporting elements 18e-f, 18g- h has an L-shape with a lower end portion 18'e-f, 18'g-h extending parallel to the extension of the main body 13, on which end portions 18'e-f, 18'g-h the rail portions 20e-f, 20g-h are able to rest. In the shown embodiment the end portions 18'e-f, 18'g-h of each set are facing each other but may in an alternative embodiment instead face away from each other.

Thus, the rail portions 20a-b, 20c-d arranged on the first and second pair of rail supporting elements 18a-b, 18c-d are configured to support one type transportation device 8c, e.g. a supply shuttle for supplying goods 2 to the designated storage location, and the rail portions 20e-f, 20g-h arranged on the third and fourth pair of rail supporting elements 18e-f, 18g-h are configured to support another type of transportation device 8d, e.g. a picker shuttle for picking goods at the designated storage location. These two transportation devices, form now on called a supply shuttle 8c and a picker shuttle 8d are operating in the storage rows 4 delivering and picking goods 2 to and from the predetermined locations of the goods 2. The supply shuttle 8c and picker shuttle 8d are respective connected, preferably by means of a wireless connection, to the transportation devices as described above as a supply transfer cart 8a and a picker transfer cart 8b, operating in the transportations aisles 6a-c. Preferably the supply shuttle 8c and the picker shuttle 8d are transported by respective transfer cart 8a, 8b to the right storage level 5a-d and the right storage row 4a-f. From respective transfer cart 8a, 8b the supply respective picker shuttle 8c, 8d moves into the storage row 4 in order to either deliver or pick up goods 2.

The supply shuttle 8c preferably carries more than one package or goods which easily can be stacked on the supply shuttle 8c. Depending on the number and size of the packages on top of the supply shuttle the stacking can grow tall. It is therefore preferred to have the supply shuttle 8c move on top of the designated rail portions 20a-b, 20c-d. The picker shuttle 8d however, often only picks up one package or goods 2 at the time before moving to another storage level 5 or row 4 to pick up another package. It is therefore preferred to have the picker shuttle 8d operating from above, moving from a suspended position on the designated rail portions 20e-f, 20g-h.

The pre-mounted transport supporting unit 10 as explained above can thus have many different embodiments. Especially the base portion 12 can come in many different embodiments. One embodiment, shown in Fig. 4 has in total four pair of rail supporting elements 18a-h, two protruding upwards and two protruding downwards. Another embodiment, shown in Fig 3d, has in total two pair of rail supporting elements 18ab, 18e-f, one protruding in an upward direction and one protruding in a downward direction. Fig. 3d also illustrates yet another embodiment only having one pair of rail supporting elements 18a-b protruding in an upward direction. Yet a further embodiment would be to have a base portion with one pair of rail supporting elements (not shown) protruding in a downward direction. Thus, the combinations of rail supporting elements in a storage system 1 may vary depending on location and/or operations to be performed.

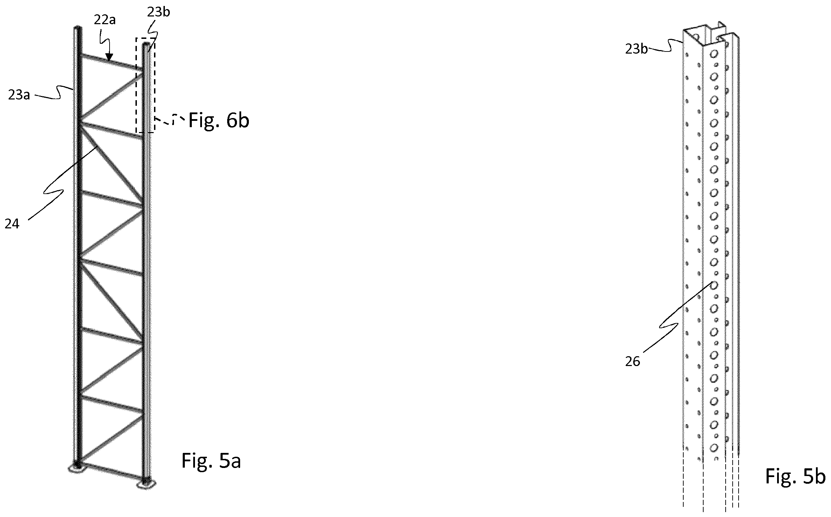

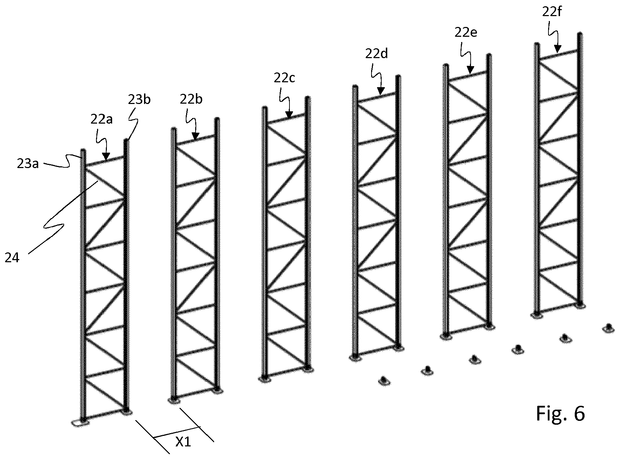

However, in order to assemble a storage section 3 of the storage system 1 there is also provided pre-mounted side units 22, 22a-f. Each side unit 22, 22a-f consist of two vertical beams 23a-b and in between a plurality of supporting racks 24 arranged between the two beams 23a-b. The beams 23a, 23b are hollow with several openings 26, shown in Figs 6a-b, provided along the extension of the beams 23a, 23b.

The pre-mounted side units 22a-f in the storage second 3 are arranged beam to beam but spaced apart and subsequently of each other. Thus, the side units 22 are arranged on a straight line with a predetermined distance X1 between each other. The number of side units 22a-f in each storage row 4a-f may of course vary depending on the area on which the storage system 1 should cover. Also, the distance X1 between respective side unit may vary depending on e.g. the length of the transport supporting unit and/or the estimated load they should be able to carry.

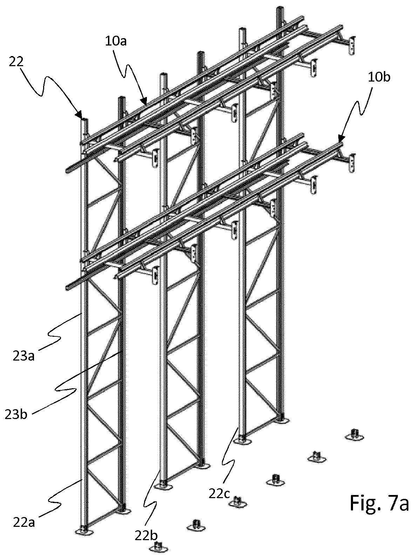

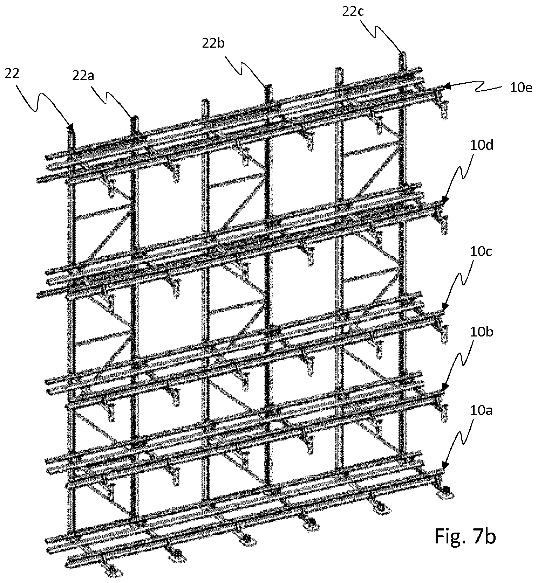

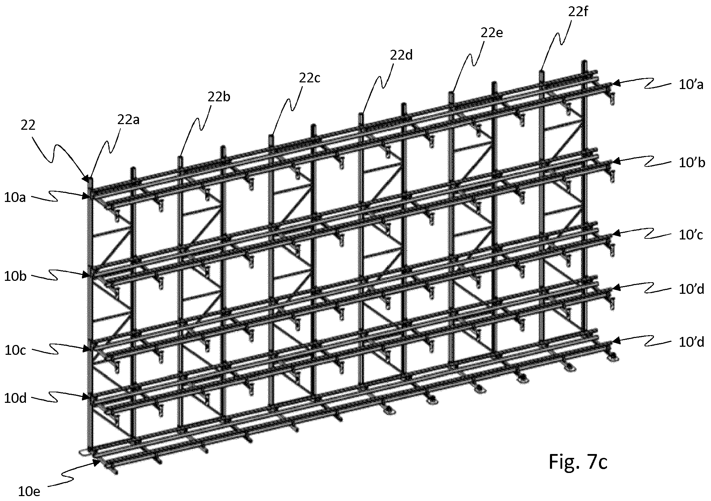

To create a storage row 4a-f, a first set and a second set of pre-mounted side units 22, 22' are provided. The side units 22a, 22b in each set are arranged as described above, on a line and spaced from each other. The second set of side units 22' are arranged spaced from and opposite of the first set of side units 22. In between the first set and the second set of side units 22, 22' a first set of subsequently arranged pre-mounted transport supporting units 10, 10' are arranged. Each base portion 12a-f of each transport supporting unit 10, 10' are mounted to respective vertical beam 23a, 23b, of the first and second set of side units 22, 22', by means of the first and second mounting element 15a, 15b. The first mounting element 15a is configured to be hooked to one opening 26 of a beam 23a, 23b of a side unit 22 of the first set. The second mounting element 15b is configured to be hooked to a corresponding opening 26 of respective beam 23a, 23b of the second set of side units 22'. The first set of side units 22, the second set of side units 22' and the first set of transport supporting units 10 are arranged to create a first storage row 4a and a first storage level 5a of the storage system 1. The actual number of transport supporting units 10 in the first set may vary depending on the desired length of the storage row 4a-d. Also, the length of each transport supporting unit 10 may vary in order to customize the handling and assembling of each storage system 1, as illustrated in Figs 7a-c.

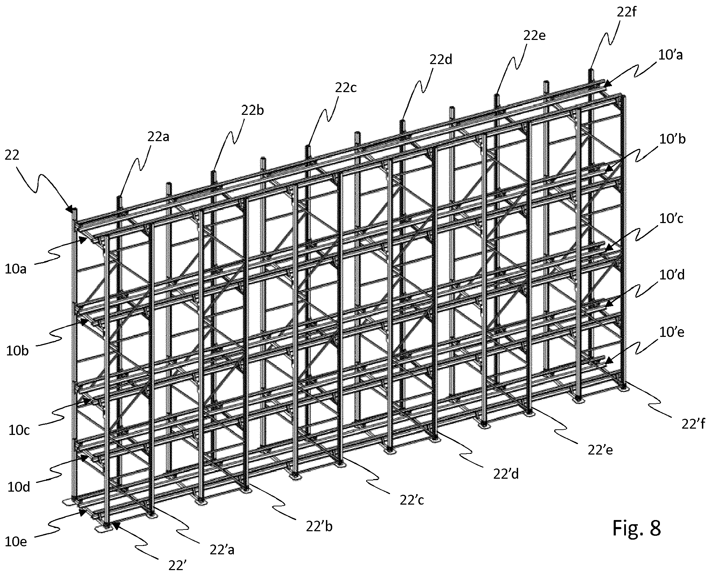

A complete storage row is illustrated in Fig. 8. Also illustrated in e.g. Fig. 8, the storage system 1 includes several sets of subsequently arranged transport supporting units 10a-e, 10'a-e arranged between the first set and the second set of side units 22a, 22b and above each other in order to create several storage levels 5a-e in the same storage rows 4a-e of the storage system 1.

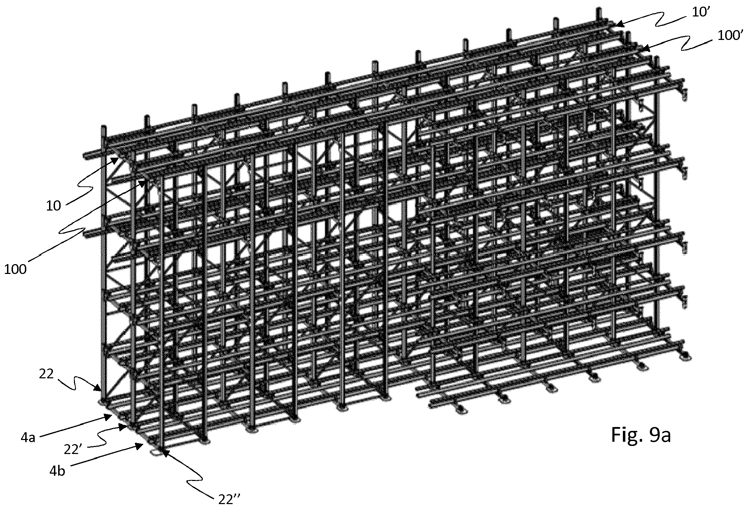

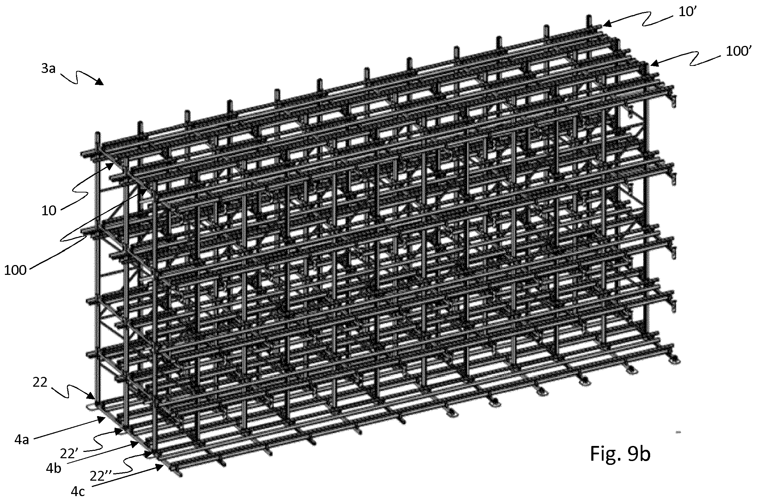

In order to further assembly the storage system 1 a third set of side units 22" is provided. The third set is arranged spaced and opposite of the second set of side units 22'. Further, another set of subsequently arranged transport supporting units 100, 100' are then arranged between the second set and the third set of side units 22', 22" in order to create parallel storage rows 4a-e, see Figs 9a and 9b.

Thus, a method for constructing a storage section 3 of a storage system 1 includes the steps of:
- providing a first set of pre-mounted side units 22, where each side unit 22a-f comprises at least two vertical beams 23a, 23b and where the side units 22a-f are arranged beam to beam, space apart and subsequently of each other,
- mounting at least a first set of subsequently arranged pre-mounted transport supporting units 10a, 10'a to the first set of side units 22, where each base portion 12a-f of each transport supporting unit 10a, 10'a is mounted to respective vertical beam 23a, 23b of the first set of side units 22 by means of the first mounting element 15a,
- mounting at least a second set of subsequently arranged pre-mounted transport supporting units 10b, 10'b to the first set of side units 22a in a position above the first set of transport supporting units 10a, 10'a such that the first and second set of transport supporting units 10a, 10b, 10'a, 10'b create two, on top of each other, storage levels 5a, 5b,

- mounting a second set of pre-mounted side units 22' to the sets of transport supporting units 10a, 10b, 10'a, 10'b where each side unit 22a-b has at least two vertical beams 23a, 23b and where each beam is mounted to respective base portion 12a-f of the sets of transport supporting unit 10a, 10b, 10'a, 10'b by means of the second mounting element 15b and further,
- mounting at least a third set of subsequently arranged pre-mounted transport supporting units 100, 100' to the second set of side units 22', where each base portion 12a-b of each transport supporting unit 100, 100' is mounted to respective vertical beam 23a, 23b of the second set of side units 22' by means of their first mounting element 15a, and
- mounting a third set of pre-mounted side units 22" to the third set of transport supporting units 100, 100', where each side unit 22a-b includes at least two vertical beams 23a-b and where each beam is mounted to respective base portion 12a-f of the third set of transport supporting unit 100, 100' by means of their second mounting element 15b.

These steps are continued in any desirable order until the storage section is constructed with the right amount of storage rows and storage levels.

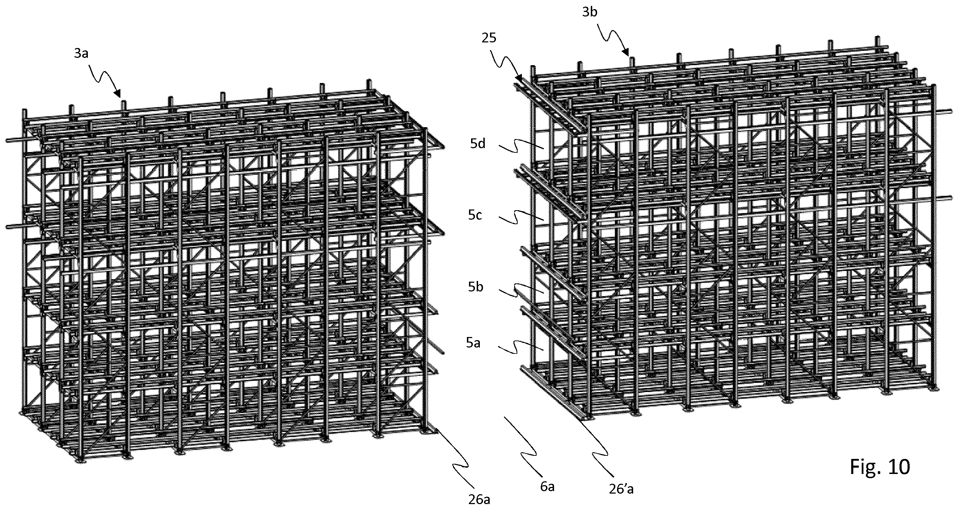

Fig. 10 illustrates a first and a second storage section 3a, 3b being connected by means of a transportation aisle 6a. As described above the transport aisles 6 are designed to allow different types of transportation devices 8 to operate. The transportation devices, above called a supply transfer cart 8a and a picker transfer cart 8b are supported by a rail arrangement 25 mounted along the side of the storage sections 3a, 3b which runs along the transportation aisle 6a. Rails 26a, 26'a of the rail arrangement 25 are mounted on each storage level 5a-d so that the supply and picker transfer carts 8a, 8b are able to move to either of the storage levels 5a-d. Further, the rail arrangement 25 is configured to support both types of transfer carts 8a, 8b such that a, to the transfer cart, connected supply shuttle 8c and picker shuttle 8d are able to operate on every storage level 5a-d if desired.

Finally, although the inventive concept has been described above with reference to specific embodiments, it is not intended to be limited to the specific form set forth herein. Rather, the invention is limited only by the accompanying claims. Other embodiments than the specific above are equally possible within the scope of these appended claims. In addition, the terms "a", "an", "first", "second" etc. are not limiting features but merely provided for clarifying examples.

## Claims

1. A pre-mounted transport supporting unit for a storage system (1) comprising:
at least two spaced apart elongated base portions (12; 12a-f), each comprising an elongated main body (13), wherein said elongated main body (13) has a first end part (14a) comprising a first mounting element (15a) and a second end part (14b) comprising a second mounting element (15b) arranged opposite the first end part (14a) and the first mounting element (15a), and at least a first pair of rail supporting elements (18a-h) protruding in a direction substantially perpendicular to the extension of said elongated main body (13), and
at least two spaced apart elongated rail portions (20a-h), extending between the at least two base portions (12; 12a-f) in a direction substantially perpendicular to the extension of said elongated main body (13) of each base portion (12; 12a-f), wherein said rail portions (20a-h) are configured to be supported by said rail supporting elements (18a-h),
wherein said transport supporting unit (10, 10'; 10a-e, 10'a-e; 100, 100') is configured to support at least one type of transportation device (8; 8c-d) when handling and/or storing goods (2) in said storage system (1).

2. The pre-mounted transport supporting unit according to claim 1, wherein said first pair of rail supporting elements (18a-h) are arranged to protrude in a substantially vertical upwards or downwards direction (U; D).

3. The pre-mounted transport supporting unit according to claim 1 or 2,
wherein each base portion (12; 12a-f) comprises at least a second pair of rail supporting elements (18c-d), arranged subsequently of said first pair of rail supporting elements (18a-b) along the extension of the main body (13) protruding in the same direction as said first pair of rail supporting elements (18a-b) and configured to support two spaced apart elongated rail portions (20c-d).

4. The pre-mounted transport supporting unit according to claim any one of the preceding claims, wherein each base portion (13) further comprises at least a third pair of rail supporting elements (18e-f), protruding in an opposite direction (U; D) of said first pair of rail supporting elements (18a-b) and configured to support two spaced apart elongated rail portions (20e-f).

5. The pre-mounted transport supporting unit according to claim 4, wherein said first pair of rail supporting elements (18a-b) are arranged to protrude in a substantially vertical upwards direction (U) and configured to support one type transportation device (8c), and wherein said third pair of rail supporting elements (18e-f) are arranged to protrude in a substantially vertical downwards direction (D) and configured to support another type of transportation device (8d).

6. The pre-mounted transport supporting unit according to claim 4 or 5,
wherein each base portion (13) further comprises at least a fourth pair of rail supporting elements (18g-h) arranged subsequently of said third pair of rail supporting elements (18e-f) along the extension of said main body (13), configured to support two spaced apart elongated rail portions (20g-h).

7. A storage system for handling and storing goods, comprising:
a first set of pre-mounted side units (22) and a second set of pre-mounted side units (22'), wherein each side unit (22a-f, 22'a-f) comprises at least two vertical beams (23a-b), wherein said side units (22a-f, 22'a-f) of each set are arranged beam to beam, space apart and subsequently of each other, and wherein said second set of side units (22') is arranged spaced and opposite of said first set of side unit (22), and
a first set of subsequently arranged pre-mounted transport supporting units (10, 10'; 10a-e, 10'a-e), according to any one of the preceding claims, arranged between said first set and said second set of side units (22, 22'), wherein each base portion (12; 12a-f) of each transport supporting unit (10, 10'; 10a-e, 10'a-e), by means of said first and second mounting elements (15a, 15b), are mounted to said vertical beams (23a-b),
wherein said first set of pre-mounted side units (22), said second set of pre-mounted side units (22') and said first set of pre-mounted transport supporting units (10, 10'; 10a-e, 10'a-e) are arranged to create a first storage level (5a-d) of a first storage row (4a-f) of said storage system (1).

8. A storage system according to claim 7, further comprising:
a second set of subsequently arranged pre-mounted transport supporting units (10, 10'; 10b, 10'b), according to any one of the claims 1-6, arranged between said first set and said second set of side units (22, 22') in a position above said first set of transport supporting units (10, 10'; 10a, 10'a),
wherein said first set of pre-mounted side units (22), said second set of pre-mounted side units (22') and said second set of pre-mounted transport supporting units (10, 10'; 10b, 10'b) are arranged to create a second storage level (5b) of said first storage row (4a-f) of said storage system (1).

9. The storage system according to claim 7 or 8, further comprising:
a third set of pre-mounted side units (22"), each side unit (22a-f) comprising at least two vertical beams (23a-b) wherein said side units (22a-f) are arranged beam to beam, spaced apart and subsequently of each other, and wherein said third set of side units (22") is arranged spaced and opposite of said second set of side unit (22'), and
a third set of subsequently arranged pre-mounted transport supporting units (100, 100') according to any one of the claims 1-6, arranged between said second set and said third set of side units (22', 22")
wherein said second set of pre-mounted side units (22'), said third set of pre-mounted side units (22") and said third set of pre-mounted transport supporting units (100, 100') are arranged to create a first storage level (5a') of a second storage row (4a-f) of said storage system (1).

10. A method for constructing a storage system (1) comprising the steps of:
- providing a first set of pre-mounted side units (22), wherein each side unit (22a-f) comprises at least two vertical beams (23a-b) and wherein said side units (22a-f) are arranged beam to beam, space apart and subsequently of each other,
- mounting at least a first set of subsequently arranged pre-mounted transport supporting units (10, 10'; 10a-e, 10'a-e), according to any one of the claims 1-6, to said first set of side units (22), wherein each base portion (12a-f) of each transport supporting unit (10, 10'; 10a-e, 10'a-e) is mounted to respective vertical beam (23a-b) of said first set of side units (22) by means of said first mounting element (15a),
- mounting a second set of pre-mounted side units (22') to said first set of transport supporting units (10, 10'; 10a-e, 10'a-e), wherein each side unit (22'a-f) comprises at least two vertical beams (23'a-b) and wherein each beam is mounted to respective base portion (12a-f) of said first set of transport supporting unit (10, 10'; 10a-e, 10'a-e) by means of said second mounting element (15b).

11. The method according to claim 10, further comprising, before the step of mounting a second set of side unit (22'), the step of:
- mounting at least a second set of subsequently arranged pre-mounted transport supporting units (10, 10'; 10b, 10'b), according to any one of the claims 1-6, to said first set of side units (22) in a position above said first set of transport supporting units (10, 10'; 10a, 10'a) such that said first and second set of transport supporting units create two, on top of each other, storage levels (5a-b).

12. The method according to claim 10 or 11, further comprising the steps of:
- mounting at least a third set of subsequently arranged pre-mounted transport supporting units (100, 100'), according to any one of the claims 1-6, to said second set of side units (22'), on the opposite side of said first set of transport supporting units (10, 10'; 10a-e, 10'a-e), wherein each base portion (12a-f) of each transport supporting unit (100, 100') is mounted to respective vertical beam (23'a-b) of said second set of side units (22') by means of said first mounting element (15a), and
- mounting a third set of pre-mounted side units (22") to said third set of transport supporting units (100, 100'), wherein each side unit (22"a-f) comprises at least two vertical beams (23"a-b) and wherein each beam (23"a-b) is mounted to respective base portion (12a-f) of said third set of transport supporting unit (100, 100') by means of said second mounting element (15b).
